Europäisches Patentamt

(19) European Patent Office

Office européen des brevets

(11) Publication number: **0 268 393**
**B1**

# (12) EUROPEAN PATENT SPECIFICATION

(45) Date of publication of the patent specification:
**27.09.89**

(51) Int. Cl.⁴: **B60G 15/06, F16F 9/54**

(21) Application number: **87309435.3**

(22) Date of filing: **26.10.87**

(54) Vehicle suspension struts.

(30) Priority: **19.11.86 US 932403**

(43) Date of publication of application:
**25.05.88 Bulletin 88/21**

(45) Publication of the grant of the patent:
**27.09.89 Bulletin 89/39**

(84) Designated Contracting States:
**DE FR GB IT**

(56) References cited:
**DE-U- 8 619 191**
**FR-A- 2 136 785**

(73) Proprietor: **GENERAL MOTORS CORPORATION,**
**General Motors Building 3044 West Grand Boulevard,**
**Detroit Michigan 48202(US)**

(72) Inventor: **Mackovjak, John Michael, 5100 Raap, Romeo**
**Michigan 48065(US)**
Inventor: **Hyma, Marvin James, 9501 Steep Hollow,**
**Pontiac Michigan 48054(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

ACTORUM AG

## Description

This invention relates to vehicle suspension struts as specified in the preamble of claim 1, for example as disclosed in US-A-4 531 759.

Prior to the present invention, various serviceable struts (that is, struts capable of being serviced), generally those of the MacPherson type, have been devised to allow the servicing of the internal parts of the strut to be carried out whilst the strut remains attached to a vehicle. An illustrative form of such a serviceable strut is disclosed in the said US-A-4 531 759.

The present invention is concerned with a vehicle suspension strut which is of the general type disclosed in the said US-A-4 531 759 but additionally incorporates a straight-forward and improved take-apart upper mount, including a jounce bumper, that has a simplified construction having the potential to optimise manufacture, reduce cost and facilitate on-board repair.

To this end a vehicle suspension strut in accordance with the present invention is characterised by the features specified in claim 1.

The invention thereby makes available a vehicle suspension strut having an upper mount (including a unitised jounce bumper) and retainer that can be readily unlocked and removed for service or replacement while providing a large-diameter access opening to the upper end of the strut for on-board servicing of the internal components of the strut.

The invention also makes available a vehicle suspension strut having a new and improved piston rod mount assembly which operatively connects the piston rod to the mount for shear operation with straight-forward and simplified construction, and having a new and improved boot seal with snap-on fit to a lower spring seat mounted by bearings to the support tube.

The vehicle suspension strut in accordance with the present invention may include new and improved upper and lower suspension spring seats, with the upper seat comprising an upper retention cup assembly fixed to the vehicle body-work and the lower seat being rotatably mounted by bearings to the strut, to permit unimpeded steering movement.

The vehicle suspension strut in accordance with the present invention may have a quick take-apart releasable upper mount including a jounce bumper retainer which can be turned through an angle which is less than 360°, and is preferably about 30°, from a locked to an unlocked position, and which can then be removed axially for jounce bumper servicing, thus allowing access for servicing the strut without the need to go through the jounce bumper, for on-board servicing of the strut with consequent elimination of the expense of removing the strut and suspension spring.

This design thus utilises an upper mount having a retention cup effectively replacing the prior type of upper spring seat, and it is potentially simple and inexpensive and capable of readily accommodating high service loads.

With a vehicle suspension strut in accordance with the present invention, a retention cup assembly, a jounce bumper assembly and a piston rod shear mount assembly are all readily interconnected and readily removable and easily rebuilt to provide an improved take-apart upper mount assembly for access to the internal parts of the strut for repair or replacement of the hydraulic components thereof. With a vehicle suspension strut in accordance with the present invention, also, the prior type of upper spring seat and bearing assembly may be eliminated, with a large-diameter bearing being used on the lower seat to permit turning movement of the strut so that steering can be achieved without steering loads being imparted to the suspension spring.

In the drawings:

Figure 1 is a fragmentary front elevation, partially in section, of a preferred embodiment of a suspension strut in accordance with the present invention for a dirigible road wheel assembly;

Figure 2 is a fragmentary top view, on the line 2--2 of Figure 1, of a mounting tower of the suspension strut in accordance with the present invention;

Figure 3 is a cross-sectional view, with parts removed, generally on the line 3--3 of Figure 1;

Figure 4 is a view similar to Figure 3 but showing parts rotated to a position for disassembly;

Figure 5 is a fragmentary elevational view generally similar to the view of Figure 1 but in part as an exploded view to illustrate the removal of components of the strut.

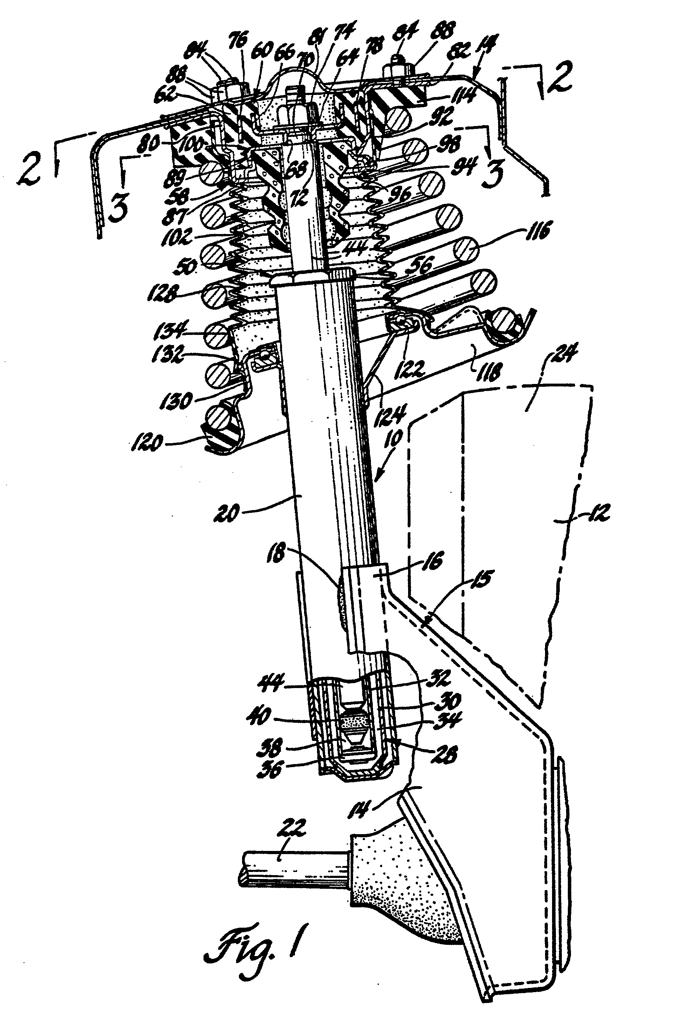

With reference now to the drawings, there is shown in Figure 1 a vehicle suspension strut assembly 10 steerably mounting a road wheel assembly 12 to a mounting tower 14 or other support structure of a road vehicle. The road wheel assembly 12 includes a stamped metal steering knuckle 15 that has a partially cylindrical upper end 16 secured by welds 18 to an outer cylindrical support tube of the suspension strut assembly 10. A conventional drive axle 22, for transmitting power from a differential, rotatably drives a road wheel 24 connected thereto by means of a conventional road wheel hub and bearing assembly operatively mounted in the steering knuckle 15. A conventional lower control arm, not shown, mounts the wheel assembly to the vehicle frame for limited jounce and rebound pivotal movements.

Operatively mounted within the support tube 20 of the suspension strut assembly is a damper cartridge 28 such as that described in US-A-4 276 971. The damper cartridge 28 is a self-contained hydraulic damper, the details of which are best seen in Figures 1 and 5 and by reference to the said US-A-4 276 971. This cartridge comprises an outer reservoir tube 30 which co-operates with an inner cylinder tube 32 to form a reservoir 34 for shock absorber fluid used in the unit. Disposed in the lower end of the cylinder tube 32 is a base valve assembly 36 for controlling the flow of hydraulic shock absorber fluid between the reservoir 34 and a variable-volume chamber 38 formed in the cylinder tube 32 between a valved piston 40 and the base valve assembly 36. A piston rod 44 extends axially upwardly from attachment to the piston 40, through the cylinder tube 32 and slidably through a rod guide 46 and upper seal 48 forming the upper end of the damper cartridge.

To secure the damper cartridge 28 in place, a service nut 50, having a depending externally threaded cylindrical wall 52, threads into internal threads 54 of the support tube 20. The service nut 50 has a hex head 56 to accommodate a mating socket of a wrenching tool in the form of a socket wrench such as is described in the aforesaid US-A-4 531 759, so that the nut 50 may be threaded into the support tube and advanced to the position shown in Figure 1 to secure the damper cartridge 28 in its operative position. Figure 5 shows the service nut threaded out of the support tube 20 so that the damper cartridge 28 of the hydraulic shock absorber, or other components, can be removed and either repaired or replaced as required.

From the rod guide 46 and seal 48, the piston rod 44 extends into operative connection with a quick take-apart upper mount assembly 58.

The quick take-apart upper mount assembly 58 comprises a piston rod shear mount assembly 60 formed from an annulus 62 of resilient elastomeric material which is loaded in shear, to check the action of the suspension spring, by the hydraulic loads of the piston 40 as the piston reciprocates in the cylinder tube 32. As is shown in Figure 1, this shear mount assembly 60 is mechanically joined to the upper end of the piston rod 44 by means of a metallic cup-shaped connector 64 having an outer annular wall 66 embedded in the elastomeric annulus 62 near the inner diameter thereof. This connector 64 has a downwardly extending neck 68 that fits on to a reduced-diameter upper end portion 70 of the piston rod 44, and also has a lower end seated on a shoulder 72 formed on the piston rod. The upper end of the piston rod 44 is threaded to receive a hex nut 74 that is threaded downwardly against the inner surface of the cup-shaped connector 64, to thereby secure the piston rod 44 and the piston to the elastomeric isolator annulus 62 of the shear mount assembly 60. Metallic elements 76 and 78 form rate plates to improve the lateral stiffness of the elastomeric isolator 62.

The elastomeric shear mount assembly 60 has a diameter sized to fit within a retention cup 80 that has an upper annular flange 82 which extends radially outwardly from the body of the cup and forms the base of an upper seat for a helical suspension spring 116.

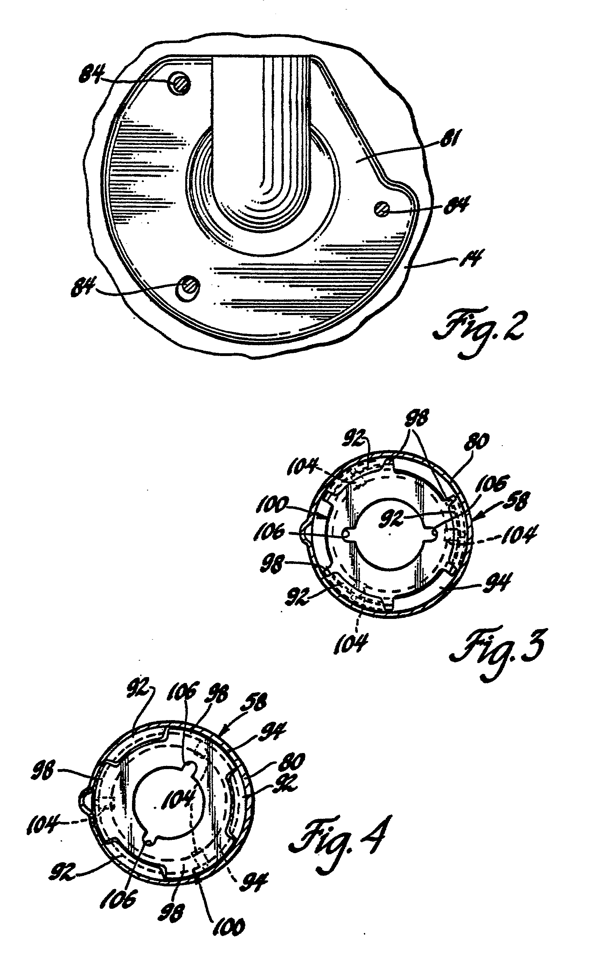

Attachment screws 84 project upwardly from the flange 82 through openings in the top of the mounting tower 14 to receive nuts 88 that are threaded on to the screws 84 to fasten the retention cup 80 to the underside of the mounting tower 14. A cover plate 81 is mounted over the piston rod shear mount assembly 60 and jounce bumper assemblies 89: removal of the cover plate 81 defines a wide-diameter access opening 87 for on-board service of the strut. The retention cup 80 and cover plate 81 are secured in place by the nuts and threaded screws, as is best seen in Figures 1 and 2.

The retention cup 80 has three tangs 92 lanced inwardly into the access opening 87 from the side wall of the cup. As shown, these tangs 92 are arcuately spaced equidistant from one another, and co-operate with an inwardly extending lower annular rim 94 of the cup to form three arcuately separated retention (locking) spaces 96 for radially extending and arcuately spaced ear-like keepers 98 that extend outwardly from the lower end of a jounce bumper retainer cup 100 of the jounce bumper retainer assembly 89.

Lanced inwardly from the sides of the retainer cup are tangs 104 which tightly grip the top of a generally cylindrical multi-lobed jounce bumper 102 that is preferably made of a suitable resilient polyurethane foam material.

The tangs 104 retain the jounce bumper 102 in position for contact with the hex nut 74 of the strut in response to jounce loads, to effectively cushion these jounce loads and reduce the transmittal of jounce energy into the vehicle. With the jounce bumper 102 inserted into the retainer cup 100 as shown in Figure 4, the jounce bumper can be turned through an angle of about 30° in a clockwise or counterclockwise direction by the use of a spanner tool, with the spanner teeth received in notches 106, by turning the retainer cup 100 from the Figure 4 to the Figure 3 position.

The ear-like keepers 98 are located so that, in conjunction with the retention spaces 96, they provide a modified bayonet-type lock, for quick installation of the jounce bumper 102 to the retainer cup 100.

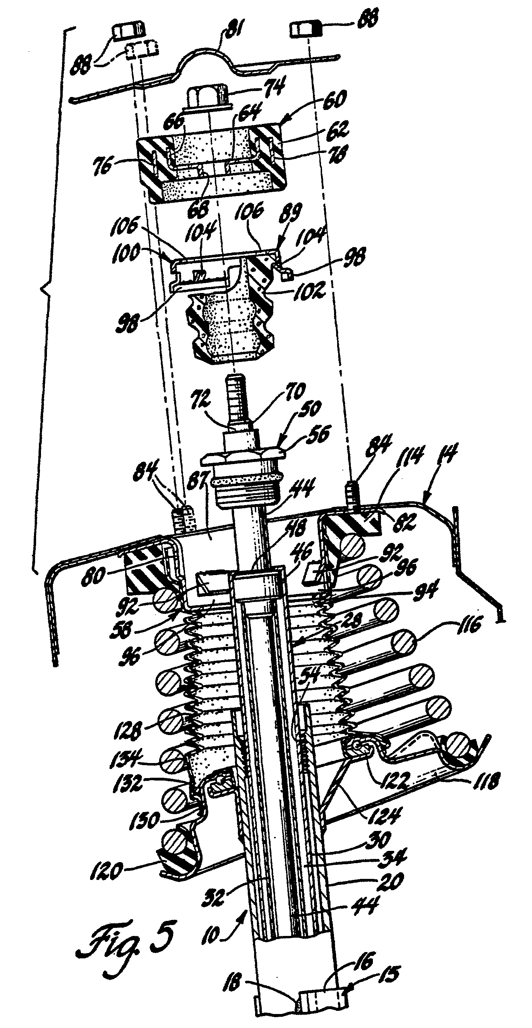

Quick release or unlocking is similarly accomplished, by turning the cup 100 through an angle of 30°, preferably in a flat plane, with the use of the spanner wrench, from the locking Figure 3 position to the unlocking Figure 4 position, and then axially withdrawing the jounce bumper 102 and its retainer cup 100. The large-diameter access opening 87 is thereby made available, and it is not necessary for tooling to be inserted through the jounce bumper 102.

Disposed around the outer diameter of the retention cup 80 and against the underside of the flange 82 is a thick washer-like elastomeric isolator 114 which co-operatively forms a cushioned seat for the uppermost turn of the helical suspension spring 116. This spring 116 is mounted at its lower end on a lower spring seat 118 that has a lower annular isolator 120 disposed between the lower spring seat and the lowermost turn of the spring. The lower spring seat 118 is further supported by an annular bearing unit 122 that is fixed to a support bearing 124 welded or otherwise secured to the outer support tube 20.

With this construction, the road wheel can be steered without turning of the suspension spring 116 or any appreciable turning of the piston rod 44 in the strut. With this arrangement, also, the upper spring seat of the prior-art type of construction has been effectively eliminated, and replaced by the isolator 114 and the retention cup 80, with the uppermost turn of the suspension spring seated against the lower surface of the flange of the cup 80.

A boot seal 128 is secured at its upper end between the retention cup 80 and the isolator 114, with its annular corrugations (accordion folds) extending downwardly and around the jounce bumper 102 and piston rod 44 to a terminal end fitted over a shoulder 130 of the lower spring seat 118. Six tangs 132 radially spaced from one another extend into the lowermost corrugation 134 of the boot seal 128, to provide securement of the boot seal to the lower spring seat 118.

With a suspension strut in accordance with the present invention, if there is a need for service of the piston rod shear mount assembly 60, the jounce bumper assembly 89 or any of the internal components of the suspension strut, the cover plate 81 can be removed by unthreading the nuts 88 from the threaded screws 84 and then manually removing the cover plate. This provides access to the hex nut 74, which can be unthreaded from the end of the piston rod 44 by the use of a simple socket tool. After the hex nut 74 has been removed, the piston rod shear mount assembly 60 can be manually removed from the retention cup 80, which still supports the suspension spring 116, so that the strut does not have to be removed from the vehicle, and is supported thereby.

After removal of the piston rod shear mount assembly 60, a spanner wrench can be inserted into the access opening 87 provided by removal of the piston rod shear mount assembly 60, whereby the jounce bumper assembly 89, including the retainer cup 100, can be turned through an angle of about 30° in a flat plane from the locked Figure 3 position to the unlocked Figure 4 position. The jounce bumper assembly 89 can then be axially removed for service, with the very large-diameter axial access opening 87 being available for the insertion of a socket tool, such as that described in the aforesaid US-A-4 531 759, for removal of the service nut 50 of the unit. In contrast to what is the case with the prior construction, the socket tool does not have to be inserted through the jounce bumper 102, thereby optimising service thereof and eliminating potential wear or damage to the jounce bumper.

After the service nut 50 has been removed, the shock absorber cartridge assembly can be readily removed by grasping the piston rod 44 and removing the piston rod axially from the unit, which will bring out the cartridge or the other shock absorber components fixed thereto.

In the event that servicing of the shock absorber is needed, a replacement cartridge can be inserted in place of the shock absorber, and the procedure reversed, as described above, to re-establish the strut while still on the vehicle.

## Claims

1. A vehicle suspension strut in a wheeled automotive vehicle having a body with suspension support structure, the strut forming part of a mounting for a road wheel of the vehicle to the suspension support structure, and having hydraulic shock absorber means operatively mounted within the strut, in which the support structure (14) has an access opening (87) for servicing the shock absorber means (28), the strut includes an outer support tube (20) operatively connected to the vehicle road wheel mounting (15) and extending upwardly therefrom, the hydraulic shock absorber means (28) is operatively mounted within the support tube (20) and is separable therefrom, the shock absorber means (28) incorporates a piston (40) and piston rod (44) operatively mounted therein, a suspension spring (116) has a lower end mounted to the support tube (20) and extends upwardly therearound, and an upper mount assembly (58) is provided for the strut, characterised in that the upper mount assembly (58) includes a retention cup assembly (80) which receives the loads from the suspension spring (116), jounce bumper assembly means (89) is mounted by quick-release retention means (92,98) to the retention cup assembly (80), a piston rod shear mount assembly (60) is mounted in the retention cup assembly (80), nut means (74) secures the piston rod shear mount assembly (60) to the piston rod (44), and cover plate means (81) secures the piston rod shear mount assembly (60) within the retention cup assembly (80), the shear mount assembly (60) and the jounce bumper assembly means (89) being readily removable to provide an axial opening (87) to the upper portion of the support tube (20) to provide access to the interior thereof by way of removable retainer means (50) that is fastened to the upper end of the support tube (20), thereby allowing for onboard servicing of the strut.

2. A vehicle suspension strut according to claim 1, characterised in that the quick-release retention means (92,98) is formed as locking means, and that the upper mount assembly (58) comprises the readily removable piston rod shear mount assembly (60) and jounce bumper assembly means (89).

3. A vehicle suspension strut according to claim 2, characterised in that the suspension spring (116) comprises a helical suspension spring which has an end coil of the lower end thereof mounted to the support tube (20) and also includes an upper end operatively mounted to the support structure (14), and that the piston rod shear mount assembly (60) and the jounce bumper assembly means (89) together form an upper quick take-apart mount for the strut, the piston rod shear mount assembly (60) has a resilient elastomeric member (62) that is operatively attached to the piston rod (44) to receive the hydraulic loads from the piston (40) in jounce and rebound movement, and the jounce bumper assembly means (89) has a resilient jounce member (102) for cushioning jounce loads of the strut, with the quick-release locking means (92,98) being rotatable through an arc of less than 360° to selectively connect the jounce bumper assembly means (89) to the retention cup assembly (80) or alternatively allow the jounce bumper assembly means (89) to be removed axially through the upper part of the upper mount assembly (58) to provide the access opening (87) for axial passage to the strut, whereby the shock absorber (28) can be serviced by removal of the piston (40) from the support tube (20) through the access opening (87) while the suspension spring (116) supports the vehicle.

4. A vehicle suspension strut according to claim 3, characterised in that the removable retainer means (50) comprises a service nut releasably fitted on to the end of the support tube (20) for retaining the shock absorber (28) therein, and that the jounce bumper (102) is secured to the jounce bumper assembly (89) and is removable therewith from the upper mount assembly (58) by limited turning in a flat plane to provide an access opening (87) as aforesaid that has a diameter sufficiently wide to permit the insertion of a wrenching tool.

5. A vehicle suspension strut according to claim 3 or 4, characterised in that the upper end of the helical suspension spring (116) is operatively mounted to the support structure (14) by way of an annular spring seat (82,114) having a centralised aperture providing the access opening (87) and also having a flange (82) for receiving the upper end coil of the suspension spring (116) adjacent the support structure (14), the resilient jounce member (102) is of generally cylindrical form, and has a central opening therethrough and is supported above the upper end of the strut and engageable therewith to deflect and cushion and limit jounce motions of the strut, the resilient elastomeric member (62) of the piston rod shear mount assembly (60) comprises an elastomeric mounting ring (62) that has a central opening therethrough and is disposed above the upper spring seat (82,114) for receiving vehicle suspension loads, and fastener means (88) connect the cover plate means (81) to the support structure (14) adjacent the access opening (87).

6. A vehicle suspension strut according to any one of claims 1 to 5, characterised in that the lower end of the suspension spring (116) is mounted to the support tube (20) by means of a lower spring seat (118) which is mounted by bearings (122) to the support tube (20), and a tubular boot seal (128) is secured at its upper end to the upper mount assembly (58) and has its lower end secured with a snap-on fit to the lower spring seat (118).

## Patentansprüche

1. Fahrzeug-Federbein bei einem mit Rädern versehenen Kraftfahrzeug mit einer Karosserie mit Federungs-Abstützaufbau, wobei das Federbein einen Teil einer Befestigung für ein Straßenrad des Fahrzeugs an dem Federungs-Abstützaufbau bildet und hydraulische Stoßdämpfermittel besitzt, welche wirksam innerhalb des Federbeins angebracht sind, wobei der Abstützaufbau (14) eine Zugangsöffnung (87) zur Wartung des Stoßdämpfermittels (28) besitzt, das Federbein ein wirksam mit der Fahrzeug-Straßenradbefestigung (15) verbundenes äußeres Stützrohr (20) enthält, und sich von da nach oben erstreckt, das hydraulische Stoßdämpfermittel (28) wirksam innerhalb des Stützrohrs (20) angebracht und davon abtrennbar ist, das Stoßdämpfermittel (28) einen Kolben (40) und eine Kolbenstange (44) wirksam darin befestigt enthält, eine Tragfeder (116) ein unteres an dem Stützrohr (20) angebrachtes Ende besitzt und sich von dort herum nach oben erstreckt und eine obere Befestigungsanordnung (58) für das Federbein vorgesehen ist, dadurch gekennzeichnet, daß die obere Befestigungsanordnung (58) eine Haltenapfanordnung (80) enthält, welche die Belastungen von der Tragfeder (116) aufnimmt, eine Aufschlagdämpfer-Anordnungseinrichtung (89) durch Schnell-Löse-Haltemittel (92, 98) an der Haltenapfanordnung (80) angebracht ist, eine Kolbenstangen-Scherbefestigungsanordnung (60) in der Haltenapfanordnung (80) angebracht ist, Muttermittel (74) die Kolbenstangen-Scherbefestigungsanordnung (60) an der Kolbenstange (44) sichert und Deckplattenmittel (81) die Kolbenstangen-Scherbefestigungsanordnung (60) innerhalb der Haltenapfanordnung (80) sichert, die Scherbefestigungsanordnung (60) und die Aufschlagdämpfer-Anordnungseinrichtung (89) leicht entfernbar sind, um eine axiale Öffnung (87) zum oberen Abschnitt des Stützrohres (20) zu schaffen, und um Zugang zu dem Inneren desselben über entfernbares Haltemittel (50) zu schaffen, das an dem oberen Ende des Stützrohres (20) befestigt ist, um dadurch eine Wartung des Federbeins an Bord zuzulassen.

2. Fahrzeug-Federbein nach Anspruch 1, dadurch gekennzeichnet, daß das Schnellöse-Haltemittel (92, 98) als Rastmittel ausgebildet ist und daß die obere Befestigungsanordnung (58) die leicht entfernbare Kolbenstangen-Scherbefestigungsanordnung (60) und die Aufschlagdämpfer-Anordnungseinrichtung (89) umfaßt.

3. Fahrzeug-Federbein nach Anspruch 2, dadurch gekennzeichnet, daß die Tragfeder (116) eine Wendel-Tragfeder umfaßt, von der eine Endwindung des unteren Endes an dem Stützrohr (20) angebracht ist, und die auch ein oberes Ende enthält, das wirksam an dem Abstützaufbau (14) befestigt ist, und daß die Kolbenstangen-Scherbefestigungsanordnung (60) und die Aufschlagdämpfer-Anordnungseinrichtung (89) zusammen eine obere schnell auseinandernehmbare Befestigung für das Federbein bilden, daß die Kolbenstangen-Scherbefestigungsanordnung (60) ein elastisches elastomeres Glied (62) besitzt, das wirksam an der Kolbenstange (44) zur Aufnahme der hydraulischen Lasten von dem Kolben (40) bei Aufschlag- und Rückschlag-Bewegung angebracht ist, und daß die Aufschlagdämpfer-Anordnungseinrichtung (89) ein elastisches Aufschlagglied (102) zum Abpolstern von Aufschlagbelastungen des Federbeins besitzt, wobei das Schnellöse-Rastmittel (92, 98) durch einen Bogen von weniger als 360° drehbar ist, um wahlweise die Aufschlagdämpfer-Anordnungseinrichtung (89) mit der Haltenapfanordnung (80) zu verbinden oder alternativ ein Entfernen der Aufschlagdämpfer-Anordnungseinrichtung (89) in Axialrichtung durch den oberen Teil der oberen Befestigungsanordnung (58) zuzulassen, um die Zugrifföffnung (87) für axialen Durchlaß zu dem Federbein zu schaffen, wodurch der Stoßdämpfer (28) durch Entfernen des Kolbens (40) vom Stützrohr (20) durch die Zugrifföffnung (87) gewartet werden kann, während die Tragfeder (116) das Fahrzeug abstützt.

4. Fahrzeug-Federbein nach Anspruch 3, dadurch gekennzeichnet, daß das entfernbare Haltemittel (50) eine lösbar auf ein Ende des Stützrohres (20) aufgepaßte Wartungsmutter umfaßt, um den Stoßdämpfer (28) darin zurückzuhalten, und daß der Aufschlagdämpfer (102) an der Aufschlagdämpfer-Anordnung (89) sicher befestigt und damit von der oberen Befestigungsanordnung (85) durch eine begrenzte Drehung in einer flachen Ebene entfernbar ist, um eine Zugrifföffnung (87) wie erwähnt zu schaffen mit einem für das Einsetzen eines Mutternschlüssels ausreichenden Durchmesser.

5. Fahrzeug-Federbein nach Anspruch 3 oder 4, dadurch gekennzeichnet, daß das obere Ende der Wendel-Tragfeder (116) wirksam an dem Abstützaufbau (14) über einen Ring-Federsitz (82, 114) mit einer Zentralöffnung angebracht ist, welche die Zugrifföffnung (87) schafft, und auch mit einem Flansch (82) zur Aufnahme der oberen Endwindung der Tragfeder (116) benachbart zum Abstützaufbau (14), daß das elastische Aufschlagglied (102) von allgemein zylindrischer Form ist, eine zentrale Durchgangsöffnung besitzt, über dem oberen Ende des Federbeins abgestützt ist und mit diesem in Eingriff gebracht werden kann, um Aufschlagbewegungen des Federbeines abzulenken, abzupolstern und zu begrenzen, daß das elastische elastomere Glied (62) der Kolbenstangen-Scherbefestigungsanordnung (60) einen elastomeren Montagering (62) umfaßt, der eine zentrale Durchgangsöffnung besitzt und über dem oberen Federsitz (82, 114) zur Aufnahme von Fahrzeug-Federungsbelastungen angeordnet ist, und daß Befestigungsmittel (82) das Deckplattenmittel (81) mit dem Abstützaufbau (14) benachbart zur Zugriffsöffnung (87) verbinden.

6. Fahrzeug-Federbein nach einem der Ansprüche 1 bis 5, dadurch gekennzeichnet, daß das untere Ende der Tragfeder (116) an dem Stützrohr (20) mittels eines unteren Federsitzes (118) angebracht ist, der durch Lager (122) an dem Stützrohr (20) angebracht ist, und daß eine rohrförmige Dichtmanschette (128) an ihrem oberen Ende an der oberen Befestigungsanordnung (58) befestigt ist und daß deren unteres Ende mit einer Aufschnappassung an dem unteren Federsitz (118) gesichert ist.

## Revendications

1. Jambe de suspension pour véhicule, disposée dans un véhicule automobile sur roues comportant une carrosserie possédant une structure de support de suspension, cette jambe de suspension faisant partie de l'ensemble de montage d'une roue du véhicule sur cette structure de support de suspension et un amortisseur hydraulique étant monté fonctionnellement dans la jambe de suspension, tandis que la structure de support (14) présente une ouverture d'accès (87) permettant l'entretien de l'amortisseur (28) et que la jambe de suspension comprend un tube extérieur de support (20) solidaire fonctionnellement de l'ensemble de montage de roue (15) et s'étendant vers le haut à partir de celui-ci, l'amortisseur hydraulique (28) étant monté fonctionnellement à l'intérieur du tube de support (20) en en étant séparable et cet amortissuer hydraulique (28) comprenant un piston (40) et une tige de piston (44) qui y sont montés fonctionnellement, tandis qu'un ressort de suspension (116) présente son extrémité inférieure montée sur le tube de support (20) et s'étend vers le haut autour de celui-ci et qu'un ensemble de monture supérieure (28) est prévu pour la jambe de suspension, caractérisé en ce que cet ensemble de monture supérieure (58) comprend une cuvette de retenue (80) qui reçoit les efforts provenant du ressort de suspension (116), en ce que l'ensemble du butée d'écrasement (89) est monté par des moyens de retenue à libération rapide (92, 98) sur la cuvette de retenue (80), en ce qu'un ensemble de montage de tige de piston à sollicitation en cisaillement (60) est monté dans cette cuvette de retenue (80), en ce qu'un écrou (74) immobilise cet ensemblage de montage (60) sur la tige de piston (44) et une plaque de recouvrement (81) immobilise cet ensemble de montage (60) à l'intérieur de la cuvette de retenue (80), l'ensemble de montage (60) et l'ensemble de butée d'écrasement (89) pouvant être facilement extraits de façon à libérer une ouverture axial (87) donnant sur la partie supérieure du tube de support (20) afin de fournir un accès à l'intérieur de celui-ci à l'aide d'un moyen amovible de retenue (50) qui est fixé sur l'extrémité supérieure du tube de support (20), autorisant ainsi un entretien de la jambe de suspension sur le véhicule même.

2. Jambe de suspension pour véhicule, suivant la revendication 1, caractérisée en ce que les moyens de retenue à libération rapide (92, 98) se présentent sous la forme de moyens de verrouillage et en ce que l'ensemble de monture supérieure (58) comprend l'ensemble de montage de tige de piston à sollicitation en cisaillement à extraction facile (60) et l'ensemble de butée d'écrasement (89).

3. Jambe de suspension pour véhicule, suivant le revendication 2, caractérisée en ce que le ressort de suspension (116) comprend un ressort hélicoïdal de suspension qui présente à son extrémité inférieure une spire extrême montée sur le tube de support (20) et comporte aussi une extrémité supérieure montée fonctionnellement sur la structure de support (14) et en ce que l'ensemble de montage de tige de piston à sollicitation en cisaillement (60) et l'ensemble de butée d'écrasement (89) forment ensemble une monture supérieure à démontage rapide pour la jambe de suspension, cet ensemble de montage (60) comporte une pièce élastomère élastique (62) qui est fixée fonctionnellement sur la tige de piston (44) de façon à recevoir les efforts hydrauliques provenant du piston (40) lors d'un mouvement d'écrasement et de rebondissement et l'ensemble du butée d'écrasement (89) comprend une pièce élastique d'écrasement (102) destinée à amortir les efforts d'écrasement de la jambe de suspension, les moyens de verrouillage à libération rapide (92, 98) pouvant pivoter d'un angle inférieur à 360° de façon à rendre de manière sélective l'ensemble de butée d'écrasement (89) solidaire de la cuvette de retenue (80) ou, alternativement, de permettre que cet ensemble de butée d'écrasement (89) soit extrait axialement à travers la partie supérieure de l'ensemble de monture supérieure (58) afin de libérer l'ouverture d'accès (87) pour offrir un passage axial vers la jambe de suspension, de sorte qu'on peut entretenir l'amortisseur (28) en retirant le piston (40) du tube de support (20) à travers l'ouverture d'accès (87) alors même que le ressort de suspension (116) supporte le véhicule.

4. Jambe de suspension pour véhicule, suivant le revendication 3, caractérisée en ce que les moyens amovibles de retenue (50) sont constitués par un écrou d'entretien engagé de manière amovible sur l'extrémité du tube de support (20) en vue de retenir l'amortisseur (28) dans celui-ci et en ce que la butée d'écrasement (102) est immobilisée sur l'ensemble du butée d'écrasement (89) et peut être retirée avec celui-ci hors de l'ensemble de monture supérieure (58) par un pivotement limité dans un plan horizontal de façon à libérer une ouverture d'accès (87), comme dit précédemment, qui offre un diamètre suffisamment large pour permettre l'introduction d'une clé de serrage.

5. Jambe de suspension pour véhicule, suivant la revendication 3 ou 4, caractérisée en ce que l'extrémité supérieure du ressort hélicoïdal de suspension (116) est monté fonctionnellement sur la structure de support (14) au moyen d'un appui annulaire de ressort (82, 114) qui présente un passage central offrant l'ouverture d'accès (87), ainsi qu'une bride (82) destinée à recevoir la spire extrême supérieure du ressort de suspension (116) au voisinage de la structure de support (14), en ce que la pièce d'écrasement élastique (102) est d'une forme sensiblement cylindrique, est traversée par une ouverture centrale et est portée au-dessus de l'extrémité supérieure de la jambe de suspension en pouvant venir au contact de celle-ci de façon à amortir et limiter les mouvements d'écrasement de la jambe de suspension, en ce que la pièce élastomère élastique (62) de l'ensemble de montage de tige de piston à sollicitation en cisaillement (60) comprend un anneau élastomère de montage (62), qui est traversé par une ouverture centrale et est disposé au-dessus de l'appui supérieur de ressort (82, 114) afin de recevoir les efforts de suspension du véhicule, et des moyens de fixation qui rendent la plaque de recouvrement (81) solidaire de la structure de support (14) au voisinage de l'ouverture d'accès (87).

6. Jambe de suspension pour véhicule, suivant l'une quelconque des revendications 1 à 5, caractérisée en ce que l'extrémité inférieure du ressort de suspension (116) est montée sur le tube de support (20) au moyen d'un appui inférieur de ressort (118) qui est monté par des roulements (122) sur le tube de support (20) et en ce qu'un soufflet protecteur tubulaire (128) est fixé à son extrémité supérieure sur l'ensemble de monture supérieure (58) et présente son extrémité inférieure fixée par mise en place à enclenchement brusque sur l'appui inférieur de ressort (118).

*Fig. 1*

*Fig. 2*

*Fig. 3*

*Fig. 4*

*Fig. 5*